# EUROPÄISCHE PATENTSCHRIFT

(11) **EP 0 696 501 B1**
(45) Veröffentlichungstag und Bekanntmachung des Hinweises auf die Patenterteilung: **21.04.1999**
(21) Anmeldenummer: 95109411.9
(22) Anmeldetag: 19.06.1995
(51) Int. Cl.: B32B 27/34, B32B 27/30, C09J 133/26, B32B 27/08

(54) **Thermoplastischer Mehrschichtverbund mit guter Schichtenhaftung**
Thermoplastic laminate with good layer adhesion
Stratifié thermoplastique ayant une bonne adhésion contre les couches

(30) Priorität: 11.08.1994 DE 4428414
(43) Veröffentlichungstag der Anmeldung: 14.02.1996
(73) Patentinhaber: HÜLS AKTIENGESELLSCHAFT, 45764 Marl (DE)
(72) Erfinder: Oenbrink, Georg, Dr., D-48249 Dülmen (DE); Röber, Stefan, Dr., D-22453 Hamburg (DE); Meier-Kaiser, Michael, Dr., D-64319 Pfungstadt (DE)

(56) Entgegenhaltungen:
- EP-A- 0 404 346
- EP-A- 0 464 561
- EP-A- 0 637 511
- EP-A- 0 649 738
- EP-A- 0 649 739
- EP-A- 0 650 004
- EP-A- 0 673 762
- US-A- 4 415 706
- US-A- 5 089 335

## Beschreibung

Gegenstand der Erfindung sind thermoplastische Mehrschichtverbunde aus Polyamiden und Polyalkyl(meth)acrylaten mit guter Schichtenhaftung.

Spritzgegossene und extrudierte Formteile bzw. großflächige Halbzeuge wie Platten oder Profile aus Polyalkylacrylat oder Polyalkylmethacrylat [z. B. Polymethylmethacrylat (PMMA)] finden Verwendung bei der Herstellung von Maschinenschutzverglasungen, Schallschutzwänden, Abdeckungen für Werbeflächen, in Bushaltestellen und Telefonzellen, in Leuchtenabdeckungen und Lichtkuppeln und vielem anderen mehr. Grund hierfür sind neben der Transparenz und den sonstigen guten optischen Eigenschaften der Polyalkyl(meth)acrylate unter anderem das gute mechanische Eigenschaftsbild, die ausgezeichnete UV- und Bewitterungsbeständigkeit sowie die gute Verarbeitbarkeit dieser Materialien nach allen gängigen Verarbeitungsverfahren.

Aufgrund der mangelnden Chemikalienbeständigkeit und ausgeprägten Spannungsrißempfindlichkeit der Polyalkyl(meth)acrylate ist jedoch das Entfernen nicht wasser- oder detergentienlöslicher Verunreinigungen (z. B. sogenannter "graffities") mit Hilfe lösungsmittelhaltiger Reinigungsmittel in der Regel nicht möglich, ohne daß es zur Beeinträchtigung der optischen Eigenschaften (Eintrübung, Crazing) oder gar Zerstörung der Formteile kommt. Die mangelnde Chemikalienbeständigkeit und ausgeprägte Spannungsrißempfindlichkeit der Polyalkyl(meth)acrylate führt weiterhin dazu, daß Formteile hieraus überall dort nicht eingesetzt werden können, wo die Einwirkung von Lösemitteln oder Chemikalien nicht sicher ausgeschlossen werden kann, wie z. B. bei Verarbeitungsmaschinen, Abfüllanlagen, Leitungssystemen o. ä.

Denkbar wäre es, diesen Mangel durch eine gut haftende Beschichtung der Formteile aus Polyalkyl(meth)acrylaten mit einem transparenten oder transluzenten, chemikalien- und spannungsrißbeständigen Material zu beheben. Die Beschichtung sollte hierbei auf wirtschaftliche Weise nach den für die Thermoplastverarbeitung üblichen Verfahren wie Mehrkomponentenspritzguß, Coextrusion, Pressen usw. erfolgen Mehrschichtverbunde dieser Art sind bisher jedoch noch nicht bekannt.

Die US-A-5 089 335 offenbart einen Mehrschichtverbund, der folgende Schichten enthält:
1. Eine Schicht aus einem thermoplastischen Polymer wie z. B. Nylon,
2. eine Schicht aus einem Vinylidenchloridcopolymer, das auch kleinere Mengen an Acrylaten einpolymerisiert enthalten kann, sowie
3. dazwischen eine Schicht aus einem Acrylatcopolymer als Haftvermittler.

Aus der EP-A-0 673 762 geht ein Mehrschichtverbund hervor, der in einer Ausführungsform die Schichtenkonfiguration Polyolefin/Haftvermittler/Polyamid enthalten kann. Das Polyolefin kann ein Ethylencopolymeres mit kleineren Mengen (bis maximal ca. 40 Gew.-%) an Comonomeren wie z.B. n-Butylacrylat oder Methylmethacrylat sein

Die Aufgabe der vorliegenden Endung war es, Mehrschichtverbunde aus einem Polyalkyl(meth)acrylat und einem darauf fest haftenden, chemikalien- und spannungsrißbeständigen, thermoplastisch verarbeitbaren Werkstoff bereitzustellen

Diese Aufgabe wird gelöst durch thermoplastische Mehrschichtverbunde, die
I. mindestens aus einer Schicht aus Polyamid und
II. mindestens aus einer Schicht aus Polyalkyl(meth)acrylat
   bestehen, verbunden über
III. mindestens einen zu den Schichten I und II benachbarten Haftvermittler,
   wobei die Schichten miteinander kraftschlüssig verbunden sind.

Die für die Schicht(en) I geeigneten Polyamide sind bekannt. Beispiele für geeignete Polyamide sind:
- aliphatische Homopolyamide wie PA 46, PA 66, PA 6, PA 612, PA 810, PA 1010, PA 1012, PA 11, PA 1212 oder PA 12 [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist - H. Domininghaus, Die Kunststoffe und ihre Eigenschaften, Seite 272 VDI-Verlag (1976).]
- Copolyamide auf Basis der für die eben genannten Homopolyamide verwendeten Monomeren, wobei als Cosäure auch andere Säuren wie z.B. Isophthalsäure, Terephthalsäure oder Cyclohexan-1.4-dicarbonsäure und/oder als Codiamin auch die weiter unten genannten Diamine eingesetzt werden können.
- Gemischte aliphatisch/aromatische Polykondensate, wie sie z. B. in den US-PSS 2 071 250, 2 071 251, 2 130 523, 2 130 948, 2 241 322, 2 312 966, 2 512 606, 3 393 210 bzw. in Kirk-Othmer, Encyclopedia of Chemical Technology, 3. Auflage, Vol. 18, Wiley & Sons (1982), S. 328 und 435, beschrieben werden.
- Poly(etheresteramide) bzw. Poly(etheramide), wie sie z. B. in den DE-OSS 27 12 987, 25 23 991 oder 30 06 961 beschrieben werden.
- Transparente Polyamide oder Copolyamide, die aus verzweigten oder unverzweigten aliphatischen Diaminen mit 6 bis 12 C-Atomen wie z. B. 1.6-Hexamethylendiamin, 2.2.4- oder 2.4.4-Trimethylhexamethylendiamin, cycloaliphatischen Diaminen wie z. B. 4.4'-Diaminodicyclohexylmethan, 3.3'-Dimethyl-4.4'-diaminodicyclohexylmethan, Isophorondiamin oder aromatischen Diaminen wie m- oder p-Xylylendiamin und aliphatischen, cycloaliphatischen oder aromatischen Dicarbonsäuren mit 6 bis 12 C-Atomen aufgebaut sind. Derartige Polyamide sind beispielsweise in folgenden Schriften beschrieben: US-A-2 742 496, CH-B-480 381, CH-B-679 861, DE-A-22 25 938, DE-A-26 42 244, DE-A-27 43 515, DE-A-29 36 759, DE-A-27 32 928, EP-A-0 053 876, EP-A-0 271 308 und EP-A-0 313 436.

Im Rahmen der vorliegenden Erfindung werden bevorzugt transparente Polyamide verwendet, deren Lichtdurchlässigkeit im Wellenlängenbereich des sichtbaren Lichts bei der aufgebrachten Schichtdicke mehr als 85 % und vorzugsweise mehr als 90 % (gemessen mittels UV/VIS-Spektroskopie) beträgt. Hierbei sind sowohl amorphe als auch kristalline Polyamide geeignet. Während amorphe Polyamide von Natur aus transparent sind, kann bei kristallinen Polyamiden eine Transparenz durch bekannte Methoden, beispielsweise Zusatz eines Nucleierungsmittels oder eines anderen, z. B. amorphen, Polyamids erhalten werden.

Als bevorzugte Polyamide seien insbesondere das amorphe Polyamid aus Terephthalsäure und dem Isomerengemisch aus 2.2.4- und 2.4.4-Trimethylhexamethylendiamin, das Polyamid aus Isophthalsäure und 1.6-Hexamethylendiamin, das Polyamid aus einem Gemisch aus Terephthalsäure/Isophthalsäure und 1.6-Hexamethylendiamin, das Copolyamid aus Isophthalsäure, 3.3'-Dimethyl-4.4'-diaminodicyclohexylmethan und Laurinlactam sowie das Polyamid aus 1.12-Dodecandisäure und 4.4'-Diaminodicyclohexylmethan genannt.

Besonders bevorzugt wird das Polyamid aus 1.12-Dodecandisäure und 4.4'-Diaminodicyclohexylmethan verwendet. Dieses Polyamid ist in der Patentanmeldung DE-OS 43 10 970 beschrieben.

Die relative Lösungsviskosität ηᵣₑₗ der verwendeten Polyamide liegt im allgemeinen im Bereich von etwa 1.4 bis etwa 2.2 und vorzugsweise im Bereich von etwa 1.65 bis etwa 1.95 (gemessen an einer 0,5 gew.-%igen Lösung in m-Kresol bei 25 °C gemäß DIN 53 727/ISO 307).

Die erfindungsgemäß verwendeten Polyamide können zudem Stabilisatoren, Verarbeitungshilfsmittel, übliche Schlagzähmacher, Weichmacher sowie andere gebräuchliche Additive bzw. Zuschlagstoffe in den üblichen Mengen enthalten.

Die Schicht II ist insbesondere aus Polyalkyl(meth)acrylaten mit 1 bis 6 C-Atomen in der Kohlenstoffkette des Alkylrestes aufgebaut, wobei die Methylgruppe als Alkylgruppe bevorzugt ist. Die Polyalkyl(meth)acrylate weisen üblicherweise einen Melt Flow-Index von 0,5 bis 30 g/10 min, vorzugsweise 0,8 bis 15 g/10 min, auf, gemessen bei 230 °C mit einer Belastung von 3,8 kg.

Als Beispiele seien u. a. Polymethylmethacrylat und Polybutylmethacrylat genannt.

Es können aber auch Copolymere der Polyalkyl(meth)acrylate zum Einsatz kommen. So können bis zu 50 Gew.-%, vorzugsweise bis 30 Gew.-%, des Alkyl(meth)acrylates durch andere Monomere wie z. B. (Meth)acrylsäure, Styrol, Maleinsäureanhydrid o. ä. ersetzt sein. Beispielhaft seien genannt:

Copolymere aus Methyl(meth)acrylat mit einem Anteil von < 30 Gew.-%, vorzugsweise von 12 bis 18 Gew.-% Styrol und von < 20 Gew.-%, vorzugsweise von 6 bis 12 Gew.-% Maleinsäureanhydrid.

Das Polyalkyl(meth)acrylat der Schicht II kann darüber hinaus Stabilisatoren, Verarbeitungshilfsmittel, übliche Schlagzähmacher sowie andere gebräuchliche Additive bzw. Zuschlagstoffe in den üblichen Mengen enthalten.

Als Haftvermittler (Schicht III) werden Formmassen eingesetzt, die bei der Herstellung der Mehrschichtverbunde, insbesondere bei der Coextrusion, einen kraftschlüssigen Verbund mit den benachbarten Schichten ergeben. Es ist wünschenswert, daß sie gleichzeitig die Transparenz des Mehrschichtverbundes nicht oder nur vernachlässigbar beeinflussen. Eine Reihe derartiger Polymerer, die als Haftvermittler geeignet sind, ist im Handel erhältlich. Beispielsweise können Copolymere verwendet werden, die mindestens nachstehende Grundbausteine enthalten:
a) 14 bis 96 Gew.-%, vorzugsweise
   14 bis 85 Gew.-% 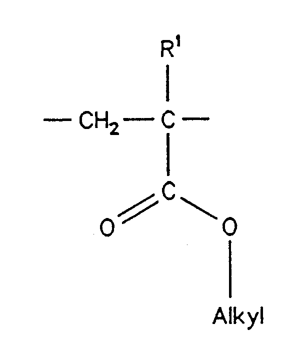
b) 0,2 bis 60 Gew.-%, vorzugsweise
   1 bis 30 Gew.-%, besonders bevorzugt
   3 bis 15 Gew.-%

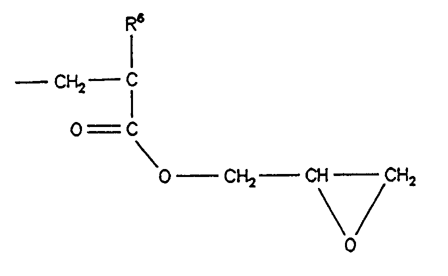

In den genannten Formeln bedeuten
Alkyl = Methyl, Ethyl, Propyl, Butyl, Pentyl, Hexyl und R¹ und R⁶ = H oder (CₙH₂ₙ₊₁) mit n = 1 bis 6,
wobei die Reste R¹ und R⁶ gleich oder verschieden sein können. Bevorzugt sind solche Grundbausteine, in denen R¹ und R⁶ Wasserstoff oder einen Methylrest bedeutet. Ebenso bedeutet Alkyl bevorzugt Methyl.

Ein Beispiel für einen geeigneten Haftvermittler sind Copolymere auf Basis von Ethylen, Glycidylmethacrylat und Methylacrylat, beispielsweise mit 6 Gew.-% Glycidylmethacrylat und 30 Gew.-% Methylacrylat.

Weiterhin können als Haftvermittler Acrylatcopolymere eingesetzt werden, die mindestens nachstehende Grundbausteine enthalten:
i) 14 bis 96 Gew.-%, vorzugsweise
   14 bis 85 Gew.-%, besonders bevorzugt
   35 bis 70 Gew.-% 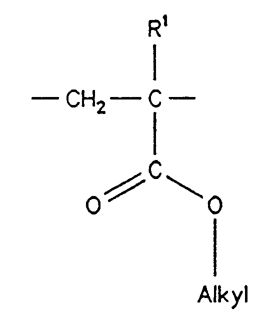
ii) 0 bis 75 Gew.-%, vorzugsweise
   10 bis 75 Gew.-%,
   besonders bevorzugt
   20 bis 40 Gew.-% 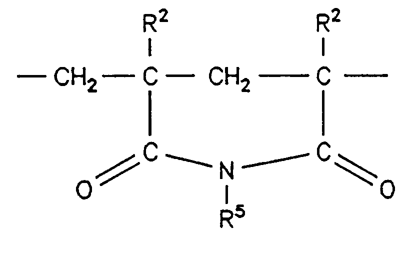
iii) 0 bis 15 Gew.-% 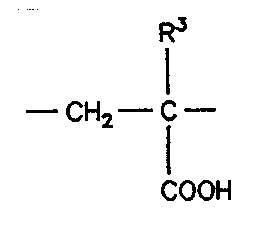
iiii) 0,2 bis 25 Gew.-%, vorzugsweise
   2 bis 20 Gew.-%, besonders
   bevorzugt 6 bis 12 Gew.-%

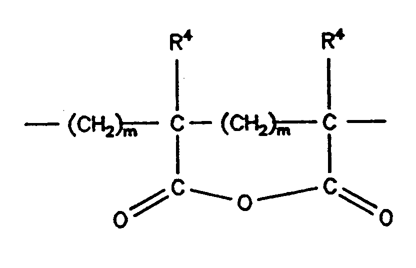

In den genannten Formeln bedeuten
m = 0 oder 1;
Alkyl = Methyl, Ethyl, Propyl, Butyl, Pentyl, Hexyl;
R¹ bis R⁵ = H oder (CₙH₂ₙ₊₁) mit n = 1 bis 6,
   wobei die Reste R¹ bis R⁵ gleich oder verschieden sein können. Bevorzugt sind solche Grundbausteine, in denen R¹ bis R⁵ Wasserstoff oder einen Methylrest bedeuten. Ebenso bedeutet Alkyl bevorzugt Methyl und m ist vorzugsweise gleich 1.

Geeignete Haftvermittler aus dieser Reihe sind beispielsweise Copolymere auf Basis von Ethylen und Methylacrylat, die mit Maleinsäureanhydrid modifiziert sind.

Die bevorzugt eingesetzten Acrylatcopolymere, bei denen 10 bis 75 Gew.-% des Grundbausteins ii) enthalten sind und R¹ bis R⁵ Methyl ist, werden auch als Polymethacrylimide, manchmal auch als Polyglutarimide bezeichnet. Es handelt sich hierbei um Polyalkyl(meth)acrylate, bei denen zwei benachbarte Carboxylatgruppen zu einem cyclischen Säureimid umgesetzt worden sind. Die Imidbildung wird bevorzugt alt Ammoniak bzw. primären Aminen, wie z. B. Methylamin, durchgeführt. Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f; H. G. Elias, Makromoleküle, Hüthig und Wepf Verlag Basel - Heidelberg - New York; US-PSS 2 146 209, 4 246 374).

Zur Erhöhung der Kälteschlagzähigkeit können die Acrylatcopolymere noch entsprechende Modifikatoren enthalten. Als Beispiel seien Kern/Schale-Polymere mit einem Polybutylacrylatkern und einer Schale aus Polymethylmethacrylat und/oder Polymethacrylimid genannt. Außer den genannten Beispielen sind weitere Modifikatoren möglich.

Den Formmassen für die Schichten I, II und III können übliche Hilfs- und Zusatzstoffe wie z. B. Flammschutzmittel, Stabilisatoren, Weichmacher, Verarbeitungshilfsmittel, Viskositätsverbesserer, Pigmente o. ä. zugefügt werden. Die Menge der genannten Mittel ist so zu dosieren, daß die gewünschten Eigenschaften nicht ernsthaft beeinflußt werden.

Erfindungsgemäß sind auch thermoplastische Mehrschichtverbunde, bei denen die Schicht II und die Schicht III identisch sind. In diesem Fall ist das Polyalkyl(meth)acrylat ein Copolymer wie weiter oben beschrieben mit einer Zusammensetzung, die von sich aus einen kraftschlflüssigen Verbund mit der Schicht I ergibt.

Die Fertigung der thermoplastischen Mehrschichtverbunde kann ein- oder mehrstufig erfolgen.

Beim einstufigen Spritzgießverfahren bringt man die verschiedenen Schmelzen in einer Form zusammen und läßt das Formteil erkalten (Mehrkomponentenspritzguß).

Beim einstufigen Extrusionsverfahren werden die verschiedenen Schmelzen in üblicher Weise coextrudiert. Hierbei sind die bekannten Formteile möglich, wie beispielsweise Rohre, Platten, U-Profile und andere Profile.

Das Coextrusionsverfahren kann durch einen nachfolgenden Blasformprozeß ergänzt werden.

Bei den mehrstufigen Verfahren wird zunächst ein Formteil aus einer der Komponenten hergestellt und dann mit den übrigen Komponenten durch Pressen, Spritzgießen oder Extrudieren verbunden.

Die folgende Tabelle zeigt Beispiele für thermoplastische Mehrschichtverbunde alt erfindungsgemäßer Schichtenanordnung.

Über diese Beispiele hinaus sind selbstverständlich auch weitere Schichtenanordnungen möglich.

**Tabelle 1**

| Schichtenanordnung von erfindungsgemäßen, thermoplastischen Mehrschichtverbunden | |
|---|---|
| Schichtenanordnung Nr. | Ausführung |
| 1 | Schicht I |
| | Schicht III |
| | Schicht II |
| 2 | Schicht I |
| | Schicht III |
| | Schicht II |
| | Schicht III |
| 3 | Schicht I |
| | Schicht III |
| | Schicht II |
| | Schicht III |
| | Schicht I |
| 4 | Schicht I |
| | Schicht II/III |
| | (Hier ist der Haftvermittler mit dem Polyalkyl(meth)acrylat identisch) |
| 5 | Schicht I |
| | Schicht II/III |
| | Schicht I |
| | (Hier ist der Haftvermittler mit dem Polyalkyl(meth)acrylat identisch) |

Mit Hilfe der Erfindung werden mehrschichtige Formteile erhalten, die gegenüber Poly(meth)acrylat eine deutlich verbesserte Chemikalienbeständigkeit und insbesondere eine verbesserte Beständigkeit gegen aromatische und teilaromatische Lösemittel aufweisen.

Die in den Beispielen aufgeführten Ergebnisse wurden mit Hilfe nachstehender Meßverfahren bestimmt.

Die Bestimmung des Melt Flow-Index der verwendeten Polymethacrylimide erfolgt bei 230 °C und unter einer Belastung von 3,8 kg (DIN 53 735).

Die Bestimmung des Melt Flow-Index der Polyacryl(meth)acrylate erfolgt bei 230 °C und unter einer Belastung von 3,8 kg (DIN 53 735).

Die Bestimmung der Lösungsviskosität (rel. Viskosität ηᵣₑₗ) der Polyamide erfolgt unter Verwendung einer 0,5 gew.-%igen m-Kresol-Lösung bei 25 °C gemäß DIN 53 727/ISO 307.

Die Prüfung der mechanischen Trennbarkeit an der Grenzfläche erfolgt mit einem Metallkeil (Schneidwinkel 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.

### Beispiele

### Eingesetzte Polyamide (Schicht I)

- PA 1:: Polyamid aus Terephthalsäure und einer Mischung aus 2.2.4- und 2.4.4-Trimethylhexamethylendiamin (ηᵣₑₗ-Wert: 1,65).
- PA 2:: Polyamid aus Isophthalsäure und 1.6-Hexamethylendiamin (ηᵣₑₗ-Wert: 1,55).
- PA 3:: Polyamid aus Terephthalsäure/Isophthalsäure (70/30) und 1.6-Hexamethylendiamin (ηᵣₑₗ-Wert: 1,55).
- PA 4:: Polyamid aus 4.4'-Diaminodicyclohexylmethan und 1.12-Dodecandisäure (ηᵣₑₗ-Wert: 1,85).

### Eingesetzte Polyalkyl(meth)acrylate (Schicht II)

- PMMA 1:: Polymethylmethacrylat (Melt Flow-Index: 3 g/10 min; Plexiglas 8N - Röhm GmbH).
- PMMA 2:: Polymethylmethacrylat (Melt Flow-Index: 25 g/10 min; Plexiglas 5N - Röhm GmbH).

### Eingesetzte Haftvermittler H 1 bis H 3: Polymethylmethacrylimide (Schicht III)

Die Polymethylmethacrylimide sind aus den weiter oben mit i) bis iiii) gekennzeichneten Bausteinen aufgebaut, wobei Alkyl und R¹ bis R⁵ jeweils Methyl bedeuten.

Zusammensetzung der eingesetzten Polymethylmethacrylate und Polymethacrylimide:

| | H 1*) | H 2 | H 3 |
|---|---|---|---|
| Gew.-% i) | 100 | 14 | 57 |
| Gew.-% ii) | 0 | 86 | 30 |
| Gew.-% iii) | 0 | 0 | 4 |
| Gew.-% iiii) | 0 | 0 | 9 |
| Melt Flow-Index [g/10 min] | 0,8 | 0,4 | 0,4 |

| | | | |
|---|---|---|---|
| *) H 1 = PMMA 1 | | | |

### Eingesetzter Haftvermittler H 4 (Schicht III)

Copolymer aus Ethylen (64 Gew.-%), Glycidylmethacrylat (6 Gew.-%) und Methylacrylat (30 Gew.-%); Melt-Flow-Index (190 °C/2,16 kg) = 9.

### Herstellung der Mehrschichtverbunde

Es wurden sowohl zwei- und dreischichtige Folien als auch fünfschichtige Preßplatten hergestellt.

Die Herstellung der zwei- und dreischichtigen Folien erfolgte in einer Labor-Coextrusionsanlage, deren Speiseextruder Schneckendurchmesser von 25 mm bzw. 30 mm aufweisen. Die Zylindertemperaturen lagen bei 280 °C (PA 1, PA 2, PA 3, PA 4), 250 °C (H 2, H 3) und 230 °C (H 1, PMMA 1, PMMA 2). Die Schichtdicken betrugen jeweils 0,5 mm.

Die Herstellung der mehrschichtigen Preßplatten erfolgte in einer Laborpresse bei 275 °C und mit einer Preßzeit von 5 min.

Die Ergebnisse sind in den Tabellen 2 und 3 wiedergegeben.

**Tabelle 2**

| Coextrudierte Folien | | | | | |
|---|---|---|---|---|---|
| Nr. | Schicht (nebeneinanderstehende Schichten sind in unmittelbarem Kontakt) | | | an der Grenzfläche mechanisch trennbar nach Lagerung bei | |
| | I. | III. | II. | 23 °C, 20 d | 75 °C, 100 h |
| A | PA 1 | | PMMA 1 | ja | ja |
| B | PA 2 | | PMMA 2 | ja | ja |
| C | PA 1 | H 1 | PMMA 1 | ja: I von III | ja: I von III |
| D | PA 2 | H 2 | PMMA 2 | ja: I von III | ja: I von III |
| 1 | PA 1 | H 3 | PMMA 1 | nein | nein |
| 2 | PA 2 | H 3 | PMMA 2 | nein | nein |
| 3 | PA 3 | H 3 | PMMA 1 | nein | nein |
| 4 | PA 4 | H 3 | PMMA 2 | nein | nein |
| 5 | PA 1 | H 4 | PMMA 1 | nein | nein |

**Tabelle 3**

| Preßplatten | | | |
|---|---|---|---|
| Nr. | Schichtenaufbau | an der Grenzfläche mechanisch trennbar nach Lagerung 20 d bei 23 °C | Spannungsrisse nach Behandlung mit Tropfen von Toluol bei 23 °C |
| E | 4,0 mm PMMA 1 | | ja |
| 6 | 0,5 mm PA 1 | | |
| | 0,5 mm H 3 | | |
| | 2,0 mm PMMA 1 | nein | nein |
| | 0,5 mm H 3 | | |
| | 0,5 mm PA 1 | | |
| 7 | 0,5 mm PA 1 | | |
| | 0,5 mm H 4 | | |
| | 2,0 mm PMMA 1 | nein | nein |
| | 0,5 mm H 4 | | |
| | 0,5 mm PA 1 | | |

## Patentansprüche

1. Thermoplastischer Mehrschichtverbund, bestehend aus
I. mindestens einer Schicht aus Polyamid und
II. mindestens einer Schicht aus Polyalkyl(meth)acrylat,
wobei das Polyalkyl(meth)acrylat ein Homopolymeres oder ein Copolymeres mit bis zu 50 Gew.-% anderer Monomerer ist,
verbunden über
III. mindestens einen zu den Schichten I und II benachbarten Haftvermittler,
wobei die Schichten fest aufeinander haften.

2. Thermoplastischer Mehrschichtverbund gemäß Anspruch 1,
dadurch gekennzeichnet,
daß das Polyalkyl(meth)acrylat ein Copolymers mit bis zu 30 Gew.-% anderer Monomerer ist.

3. Thermoplastischer Mehrschichtverbund gemäß einem der Ansprüche 1 und 2,
dadurch gekennzeichnet,
daß der Haftvermittler der Schicht III mindestens die folgenden Grundbausteine in den angegebenen Mengen enthält:
i) 14 bis 96 Gew.-% 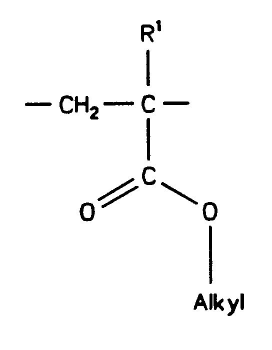
ii) 0 bis 75 Gew.-% 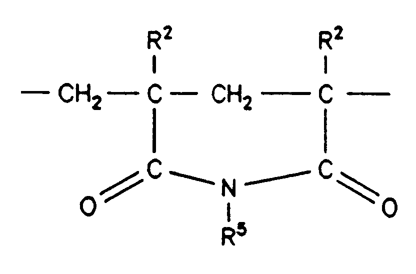
iii) 0 bis 15 Gew.- 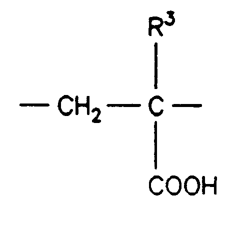 %
iiii) 0,2 bis 25 Gew.-% 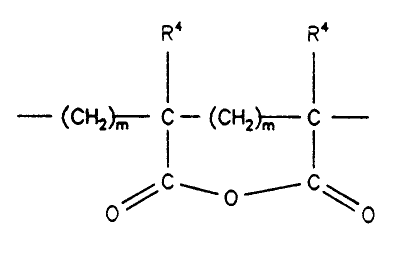
wobei m = 0 oder 1, Alkyl = Methyl, Ethyl, Propyl, Butyl, Pentyl, Hexyl und R¹ bis R⁵ = H oder (CₙH₂ₙ₊₁) mit n = 1 bis 6 bedeuten und gleich oder verschieden sein können,

4. Thermoplastischer Mehrschichtverbund gemäß Anspruch 3,
dadurch gekennzeichnet,
daß der Haftvermittler der Schicht III mindestens die folgenden Grundbausteine in den angegebenen Mengen enthält:
i) 14 bis 85 Gew.-%, vorzugsweise
35 bis 70 Gew.-% 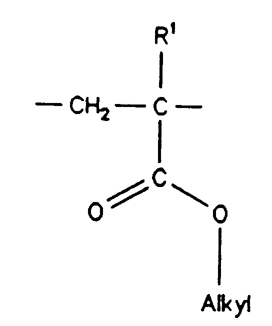
ii) 10 bis 75 Gew.-%,
vorzugsweise
20 bis 40 Gew.-% 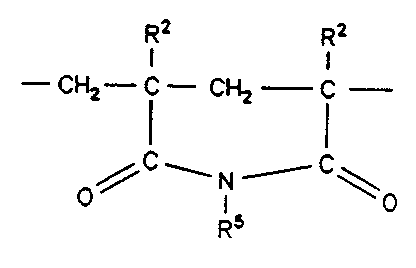
iii) 0 bis 15 Gew.-% 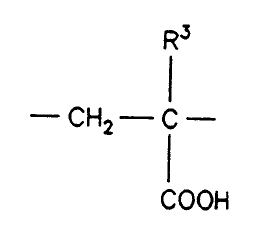
iiii) 2 bis 20 Gew.-%, vorzugsweise
6 bis 12 Gew.-%

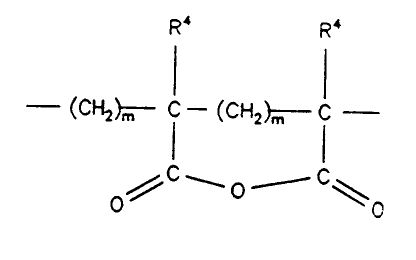

5. Thermoplastischer Mehrschichtverbund gemäß einem der Ansprüche 3 oder 4,
dadurch gekennzeichnet,
daß Alkyl sowie R¹ bis R⁵ jeweils Wasserstoff oder eine Methylgruppe darstellen und m gleich 1 ist.

6. Thermoplastischer Mehrschichtverbund gemäß Anspruch 3,
dadurch gekennzeichnet,
daß der Haftvermittler der Schicht III aus einem Copolymer aus Ethylen, Methylacrylat und Maleinsäureanhydrid besteht.

7. Thermoplastischer Mehrschichtverbund gemäß Anspruch 1,
dadurch gekennzeichnet,
daß der Haftvermittler der Schicht III mindestens die folgenden Grundbausteine in den angegebenen Mengen enthält:
a) 14 bis 96 Gew.-% 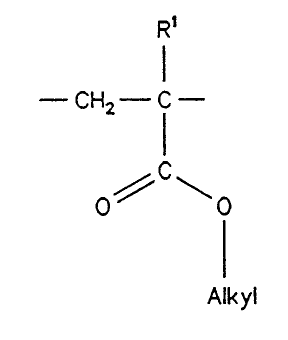
b) 0,2 bis 60 Gew.-% 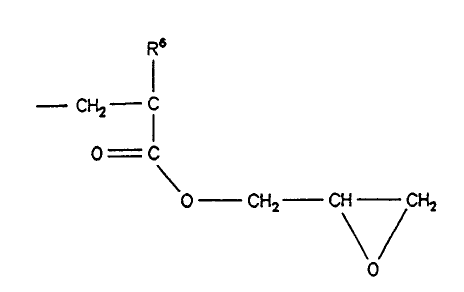
wobei Alkyl = Methyl, Ethyl, Propyl, Butyl, Pentyl, Hexyl und R¹ und R⁶ = H oder (CₙH₂ₙ₊₁) mit n = 1 bis 6.

8. Thermoplastischer Mehrschichtverbund gemäß Anspruch 7,
dadurch gekennzeichnet,
daß der Haftvermittler der Schicht III aus einem Copolymer aus Ethylen, Glycidylmethacrylat und Methylacrylat besteht.

9. Thermoplastischer Mehrschichtverbund gemäß einem der vorhergehenden Ansprüche,
dadurch gekennzeichnet,
daß die Schicht II aus einer Formmasse auf Basis von Polymethylmethacrylat oder Polybutylmethacrylat besteht.

10. Thermoplastischer Mehrschichtverbund gemäß einem der vorhergehenden Ansprüche,
dadurch gekennzeichnet,
daß die Formasse für die Schicht II Copolymere auf Basis von Methylmethacrylat enthält.

11. Thermoplastischer Mehrschichtverbund gemäß einem der vorhergehenden Ansprüche,
dadurch gekennzeichnet,
daß das Polyamid der Schicht I transparent ist.

12. Thermoplastischer Mehrschichtverbund gemäß Anspruch 11,
dadurch gekennzeichnet,
daß die Lichtdurchlässigkeit des transparenten Polyamids im Wellenlängenbereich des sichtbaren Lichts bei der aufgebrachten Schichtdicke mehr als 85 % und vorzugsweise mehr als 90 % beträgt.

13. Thermoplastischer Mehrschichtverbund gemäß einem der Ansprüche 11 oder 12,
dadurch gekennzeichnet,
daß das Polyamid der Schicht I sich aus 1,12-Dodecandisäure und 4.4'-Diaminodicyclohexylmethan herleitet.

14. Thermoplastischer Mehrschichtverbund gemäß einem der vorhergehenden Ansprüche,
dadurch gekennzeichnet,
daß er mehr als eine der Schichten I, mehr als eine der Schichten II und/oder mehr als eine der Schichten III enthält, wobei die Schichten I und II jeweils über eine dazwischenliegende Schicht III miteinander verbunden sind.

15. Thermoplastischer Mehrschichtverbund gemäß Anspruch 14,
dadurch gekennzeichnet,
daß er folgenden Schichtenaufbau aufweist:
Schicht I
Schicht III
Schicht II
Schicht III
Schicht I.

16. Verwendung des thermoplastischen Mehrschichtverbundes gemäß einem der vorhergehenden Ansprüche in Formteilen und für Hohlprofile.

17. Verwendung des thermoplastischen Mehrschichtverbundes gemäß einem der Ansprüche 1 bis 15 zur Herstellung von mehrschichtigen Formteilen und Halbzeugen für Maschinenschutzverglasungen, Sichtfenster für Maschinen, Leuchtenabdeckungen und Lichtkuppeln, Schallschutzwände, Schutzwände und Abdeckungen für Werbeflächen insbesondere in Bushaltestellen und Telefonzellen.

## Claims

1. A thermoplastic multilayer composite comprising
I. at least one layer of polyamide and
II. at least one layer of polyalkyl (meth)acrylate,
with the polyalkyl (meth)acrylate being a homopolymer or a copolymer having up to 50% by weight of other monomers,
bonded via
III. at least one coupling agent adjacent to the layers I and II,
with the layers adhering firmly to one another.

2. A thermoplastic multilayer composite according to claim 1, characterized in that the polyalkyl (meth)acrylate is a copolymer having up to 30% by weight of other monomers.

3. A thermoplastic multilayer composite according to either of claims 1 and 2, characterized in that the coupling agent of the layer III contains at least the following basic building blocks in the specified amounts:
i) from 14 to 96% by weight of 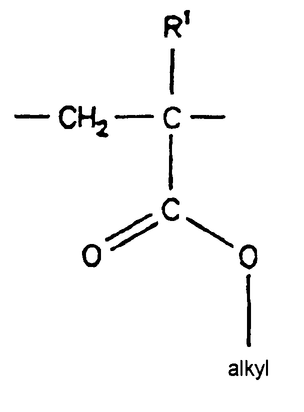
ii) from 0 to 75% by weight of 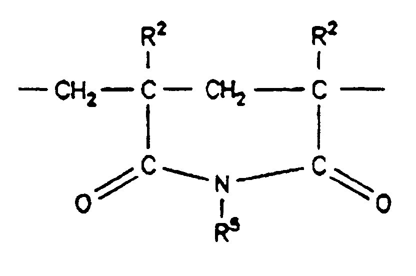
iii) from 0 to 15% by weight of 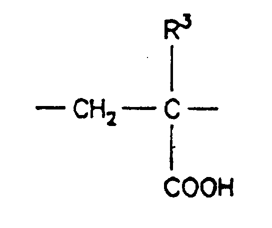
iiii) from 0.2 to 25% by weight of 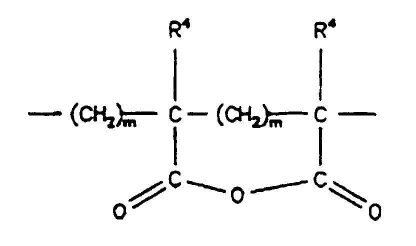 where m = 0 or 1, alkyl = methyl, ethyl, propyl, butyl, pentyl, heal and R¹ to R⁵ = H or (CₙH₂ₙ₊₁), where n = 1 to 6, and these groups can be identical or different.

4. A thermoplastic multilayer composite according to claim 3, characterized in that the coupling agent of the layer III contains at least the following basic building blocks in the specified amounts:
i) from 14 to 85% by weight, preferably
from 35 to 70% by weight, of 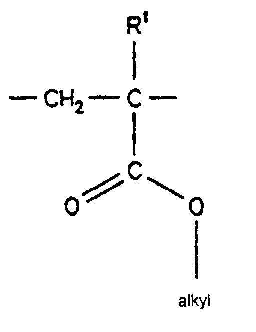
ii) from 10 to 75% by weight, preferably
from 20 to 40% by weight, of 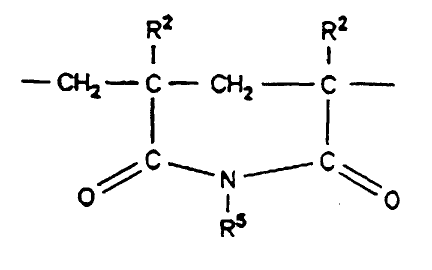
iii) from 0 to 15% by weight of 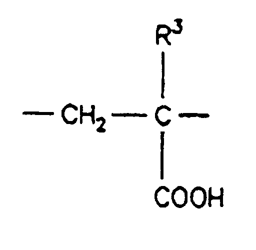
iiii) from 2 to 20% by weight, preferably
from 6 to 12% by weight, of

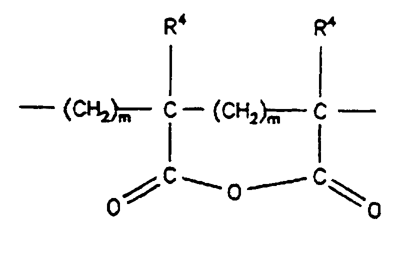

5. A thermoplastic multilayer composite according to either of claims 3 or 4, characterized in that alkyl and also R¹ to R⁵ are in each case hydrogen or a methyl group and m is equal to 1.

6. A thermoplastic multilayer composite according to claim 3, characterized in that the coupling agent of the layer III comprises a copolymer of ethylene, methyl acrylate and maleic anhydride.

7. A thermoplastic multilayer composite according to claim 1, characterized in that the coupling agent of the layer III contains at least the following basic building blocks in the specified amounts:
a) from 14 to 96% by weight of 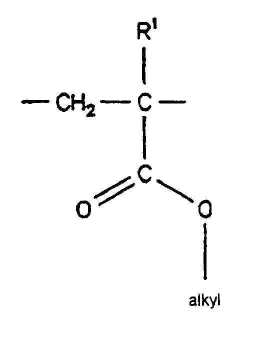
b) from 0.2 to 60% by weight of 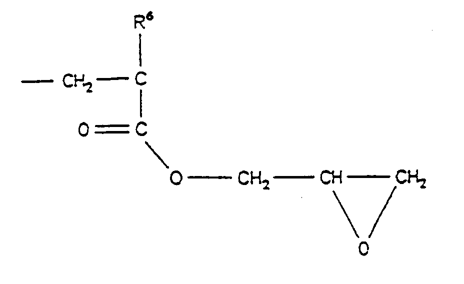 where alkyl = methyl, ethyl, propyl, butyl, pentyl, hexyl and R¹ and R⁶ = H or (CₙH₂ₙ₊₁), where n = 1 to 6.

8. A thermoplastic multilayer composite according to claim 7, characterized in that the coupling agent of the layer III comprises a copolymer of ethylene, glycidyl methacrylate and methyl acrylate.

9. A thermoplastic multilayer composite according to any one of the preceding claims, characterized in that the layer II comprises a moulding composition based on polymethyl methacrylate or polybutyl methacrylate.

10. A thermoplastic multilayer composite according to any one of the preceding claims, characterized in that the moulding composition for the layer II contains copolymers based on methyl methacrylate.

11. A thermoplastic multilayer composite according to any one of the preceding claims, characterized in that the polyamide of the layer I is transparent.

12. A thermoplastic multilayer composite according to claim 11, characterized in that the light transmittance of the transparent polyamide in the wavelength range of visible light is, at the layer thickness applied, more than 85% and preferably more than 90%.

13. A thermoplastic multilayer composite according to either of claims 11 or 12, characterized in that the polyamide of the layer I is derived from 1,12-dodecanedioic acid and 4,4'-diaminodicyclohexylmethane.

14. A thermoplastic multilayer composite according to any one of the preceding claims, characterized in that it contains more than one of the layers I, more than one of the layers II and/or more than one of the layers III, with the layers I and II being in each case bonded to one another via a layer III lying in between.

15. A thermoplastic multilayer composite according to claim 14, characterized in that it has the following build up of layers:
layer I
layer III
layer II
layer III
layer I.

16. The use of the thermoplastic multilayer composite according to any one of the preceding claims in shaped parts and for hollow profiles.

17. The use of the thermoplastic multilayer composite according to any one of claims 1 to 15 for producing multilayer shaped parts and semi-finished parts for protective shields for machines, viewing windows for machines, lamp coverings and light domes, sound-protection walls, protective walls and coverings for advertizing placards particularly in bus stops and telephone boxes.

## Revendications

1. Composite multicouche thermoplastique, constitué
I. d'au moins une couche de polyamide, et
II. d'au moins une couche d'un poly((méth)acrylate d'alkyle),
où le poly((méth)acrylate d'alkyle) est un homopolymère ou un copolymère avec jusqu'à 50 % en poids d'autres monomères,
qui sont reliés
III. par l'intermédiaire d'au moins un promoteur d'adhérence voisin des couches I et II,
les couches adhérant fermement l'une à l'autre.

2. Composite multicouche thermoplastique selon la revendication 1, caractérisé en ce que le poly((méth)acrylate d'alkyle) est un copolymère avec jusqu'à 30 % en poids d'autres monomères.

3. Composite multicouche thermoplastique selon l'une des revendications 1 et 2, caractérisé en ce que le promoteur d'adhérence de la couche III contient au moins l'un des composants de base suivants: en les quantités indiquées :
i) 14 à 96 % en poids 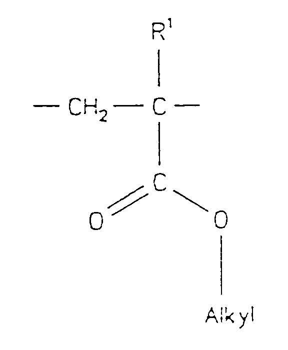
ii) 0 à 75 % en poids 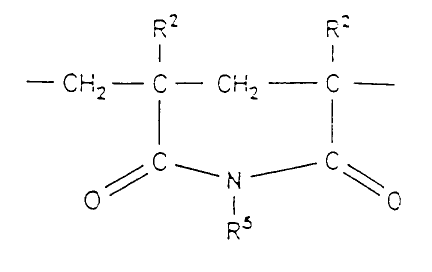
iii) 0 à 15 % en poids 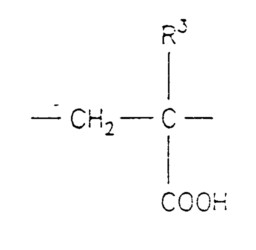
iiii) 0,2 à 25 % en poids 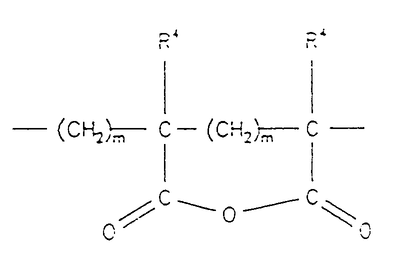 où m = 0 ou 1, alkyl est un radical méthyle, éthyle, propyle, butyle, pentyle, hexyle, et R¹ à R⁵ = H ou (CₙH₂ₙ₊₁), où n = 1 à 6, et peuvent être identiques ou différents.

4. Composite multicouche thermoplastique selon la revendication 3, caractérisé en ce que le promoteur d'adhérence de la couche III contient au moins les composants de base suivants, en les quantités indiquées :
i) 14 à 85 % en poids, de préférence 35 à 70 % en poids 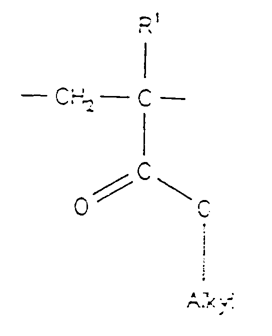
ii) 10 à 75 % en poids, de préférence 20 à 40 % en poids 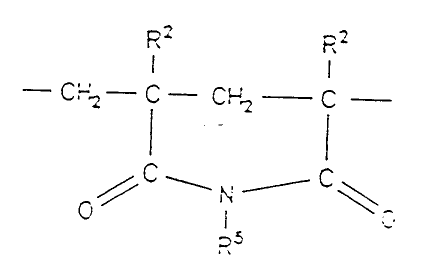
iii) 0 à 15 % en poids 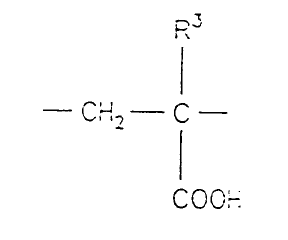
iiii) 2 à 20 % en poids, de préférence 6 à 12 % en poids

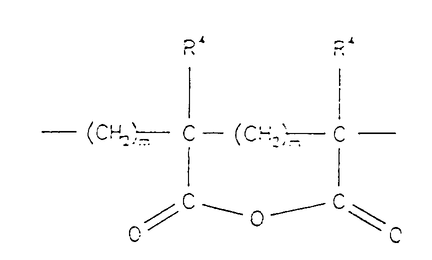

5. Composite multicouche thermoplastique selon l'une des revendications 3 ou 3, caractérisé en ce qu'alkyl, ainsi que R¹ à R⁵, représentent chacun un atome d'hydrogène ou un groupe méthyle, et m vaut 1.

6. Composite multicouche thermoplastique selon la revendication 3, caractérisé en ce que le promoteur d'adhérence de la couche III est constitué d'un copolymère d'éthylène, d'acrylate de méthyle et d'anhydride maléique.

7. Composite multicouche thermoplastique selon la revendication 1, caractérisé en ce que le promoteur d'adhérence de la couche III contient les composants de base suivants, en les quantités indiquées :
a) 14 à 96 % en poids 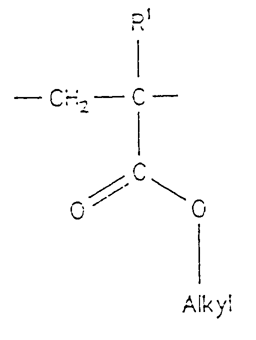
b) 0,2 à 60 % en poids 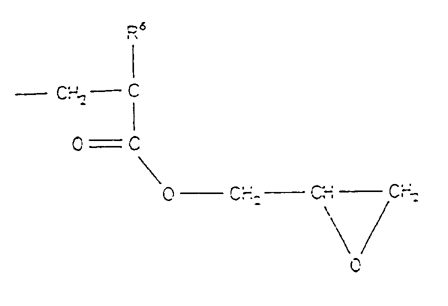 où alkyl est un radical méthyle, éthyle, propyle, butyle, pentyle, hexyle, et R¹ et R⁶ sont H ou (CₙH₂ₙ₊₁) où n = 1 à 6.

8. Composite multicouche thermoplastique selon la revendication 7, caractérisé en ce que le promoteur d'adhérence de la couche III est constitué d'un copolymère d'éthylène, de méthacrylate de glycidyle et d'acrylate de méthyle.

9. Composite multicouche thermoplastique selon l'une des revendications précédentes, caractérisé en ce que la couche II est constituée d'un mélange à mouler à base de poly(méthacrylate de méthyle) ou de poly(méthacrylate de butyle).

10. Composite multicouche thermoplastique selon l'une des revendications précédentes, caractérisé en ce que le mélange à mouler de la couche II contient des copolymères à base de méthacrylate de méthyle.

11. Composite multicouche thermoplastique selon l'une des revendications précédentes, caractérisé en ce que le polyamide de la couche I est transparent.

12. Composite multicouche thermoplastique selon la revendication 11, caractérisé en ce que la transparence à la lumière du polyamide transparent sur la plage de longueurs d'onde de la lumière visible est, pour l'épaisseur de couche telle qu'appliquée, supérieure à 85 % et de préférence supérieure à 90 %.

13. Composite multicouche thermoplastique selon l'une des revendications 11 ou 12, caractérisé en ce que le polyamide de la couche I dérive de l'acide 1,12-dodécanedioïque et du 4,4'-diaminodicyclohexylméthane.

14. Composite multicouche thermoplastique selon l'une des revendications précédentes, caractérisé en ce qu'il contient plus d'une des couches I, plus d'une des couches II et/ou plus d'une des couches III, les couches I et II étant reliées l'une à l'autre par l'intermédiaire d'une couche intercalaire III.

15. Composite multicouche thermoplastique selon la revendication 14, caractérisé en ce qu'il présente la structure de couches suivante :
couche I
couche III
couche II
couche III
couche I.

16. Utilisation du composite multicouche thermoplastique selon l'une des revendications précédentes dans des objets moulés et pour des profilés creux.

17. Utilisation du composite multicouche thermoplastique selon l'une des revendications 1 à 15 pour fabriquer des objets moulés et semi-produits multicouches pour les vitrages de protection de machines, les voyants pour machines, les couvercles de luminaires et les lumidômes, les murs anti-bruits, les murs de protection et les couvertures pour surfaces publicitaires, en particulier dans les stations d'autobus et les cabines téléphoniques.
